# EUROPÄISCHE PATENTANMELDUNG

(11) **EP 1 820 591 A1**
(43) Veröffentlichungstag der Anmeldung: **22.08.2007**
(21) Anmeldenummer: 07000239.9
(22) Anmeldetag: 08.01.2007
(51) Int. Cl.: B23D 45/10

(54) **Verfahren zum Profilieren und Trennen von Schnittholz und Werkzeugsatz zur Durchführung des Verfahrens**

(30) Priorität: 23.01.2006 DE 102006003274
(71) Anmelder: Taflo, Roland, 23966 Wismar (DE)
(72) Erfinder: Taflo, Roland, 23966 Wismar (DE); Müller, Mirko, 23970 Wismar (DE)
(74) Vertreter: Schnick, Achim

(57) **Zusammenfassung**

Verfahren zum Profilieren und Trennen von Schnittholz und Werkzeugsatz zur Durchführung des Verfahrens, mit dem Vorschubgeschwindigkeiten bis zu 500 m/min realisiert werden können.
Das Verfahren ist durch folgende Arbeitsschritte gekennzeichnet,
- Zuführen des Schnittholzes (2) zu einem ersten Profilfräser (6), der das Schnittholz an einer Seite entlang der Trennlinie mit einer Nut versieht,
- Weiterführen des Schnittholzes zu einem zweiten, dem Profilfräser (6) identischen Profilfräser (10), der in Vorschubrichtung hinter dem ersten Profilfräser angeordnet ist, und der das Schnittholz an seiner gegenüberliegenden Seite entlang der Trennlinie mit einer zweiten, der ersten Nut gegenüberliegenden Nut versieht, wobei die zweite Nut eine Tiefe aufweist, die die Materialdicke des Schnittholzes im Trennbereich weiter verringert,
- Weiterführung des Schnittholzes zu einem Trennwerkzeug (15), das in Vorschubrichtung hinter dem zweiten Profilfräser angeordnet ist, und das den zwischen der unteren und der oberen Nut entlang der Trennlinie verbliebenen Steg zerspant.

## Beschreibung

Die Erfindung betrifft ein Verfahren zum Profilieren und Trennen oder nur zum Trennen von Schnittholz und Hobelware (im folgenden als Schnittholz bezeichnet), mit hohen Schnittgeschwindigkeiten. Die Erfindung betrifft darüber hinaus einen Werkzeugsatz, mit dem Schnitthölzer mit hohen Schnittgeschwindigkeiten bearbeitet werden können.

Gemäß dem bekannten Stand der Technik wird Schnittware aus Stammholz auf entsprechenden Anlagen zu Schnittholz oder ähnlich verarbeitet. In dieser Anlage wird die Schnittware, die vorzugsweise aus sägerauher Rohware besteht, zwischen Andruckwalzen, die gleichzeitig den Vorschub des Werkstücks in der Anlage gewährleisten, Bearbeitungswerkzeugen zugeführt, die die Seitenflächen der Schnittware hobeln und gleichzeitig deren Kanten profilieren. In diesem Arbeitsverfahren wird das Schnittholz hergestellt, welches das Ausgangsprodukt für das erfindungsgemäße Verfahren darstellt.

Die Weiterverarbeitung der Schnitthölzer zu Profil- oder Konstruktionsholz erfordert das Auftrennen des Schnittholzes entsprechend den gewünschten Abmessungen des Endproduktes. Dazu wird das Schnittholz in einem nachgelagerten Arbeitsgang einem ersten als Profilfräser ausgebildeten Ritzwerkzeug 5 zugeführt. Das Ritzwerkzeug 5 schneidet in die Oberfläche des Schnittholzes 2 in Schnittrichtung eine Fuge mit einer definierten Schnitttiefe und bearbeitet gleichzeitig die durch die Fuge mit der Oberfläche dem Schnittholz gebildeten Kanten.

In einem darauf folgenden Arbeitsschritt erfolgt das Trennen des Schnittholzes. Die dazu eingesetzte Profilsäge 3 stellt sich als eine Kombination aus einem Kreissägeblatt zum Trennen des Schnittholzes und zu beiden Seiten des Sägeblattes auf der gleichen Drehachse angeordneten Profilfräsern zur Bearbeitung der durch die Trennfuge gebildeten Kanten dar.

Das den bekannten Stand der Technik darstellende Verfahren und die zur Durchführung des Verfahrens eingesetzten Werkzeuge haben hinsichtlich ihrer Schnittgeschwindigkeit Grenzen, die den Durchsatz von Schnittholz in den beschriebenen Anlagen beschränken. Gegenwärtig ist bei dem Stand der Technik zugrunde liegenden Anlagen eine Vorschubgeschwindigkeit der Schnitthölzer beim Trennen auf ca. 260 m/min beschränkt.

Diese Beschränkung ist in erster Linie auf die eingesetzten Werkzeuge zurückzuführen. Eine Erhöhung der Vorschubgeschwindigkeit des Holzwerkstücks als die wesentliche Voraussetzung für die Erhöhung des Durchsatzes von Schnitthölzern führt zu einer Instabilität des Werkzeuges, insbesondere des Sägeblattes, und damit zu Qualitätsmängeln an der Oberfläche des Profil- oder Konstruktionsholzes.

Ein weiterer Mangel, der sich bei hohen Vorschubgeschwindigkeiten des Holzwerkstücks einstellt, besteht darin, dass infolge der Instabilität, die sich durch "Flattern" des Sägeblattes ausdrückt, die seitlich an dem Sägeblatt anliegenden Profilfräser insbesondere im Spitzenbereich ausbrechen und damit die Produktivität des Verfahrens beeinträchtigen.

Aufgabe der Erfindung ist es, ein Verfahren zum Profilieren und Trennen von Schnitthölzern bereitzustellen, mit dem Vorschubgeschwindigkeiten bis zu 500 m/min realisiert werden können.

Aufgabe der Erfindung ist es weiterhin, einen Werkzeugsatz zum Profilieren und Trennen von Schnitthölzern bereitzustellen, mit dem bei der Herstellung von Profil- oder Konstruktionsholz aus Schnittholz der Materialdurchsatz wesentlich erhöht werden kann.

Eine weitere Aufgabe der Erfindung besteht darin, ein Werkzeug zum Profilieren und Trennen von Schnitthölzern mit hoher Standfestigkeit bei hohen Vorschüben bereitzustellen.

Erfindungsgemäß werden die Aufgaben durch die Merkmale des Verfahrens gemäß Anspruch 1 und durch die Merkmale des Werkzeugsatzes gemäß Anspruch 5 gelöst.

Die Erfindung wird nachfolgend anhand eines Ausführungsbeispiels näher beschrieben. Die dazugehörigen Zeichnungen zeigen in
- Fig. 1: das Verfahren zum Profilieren und Trennen von Schnittware gemäß dem bekannten Stand der Technik in einer schematischen Darstellung;
- Fig. 2: das erfindungsgemäße Verfahren zum Profilieren und Trennen von Schnitthölzern in einer schematischen Darstellung;
- Fig. 3: die einzelnen Verfahrensschritte zum Profilieren und Trennen eines Schnittholzes im der geschnittenen Vorderansicht;

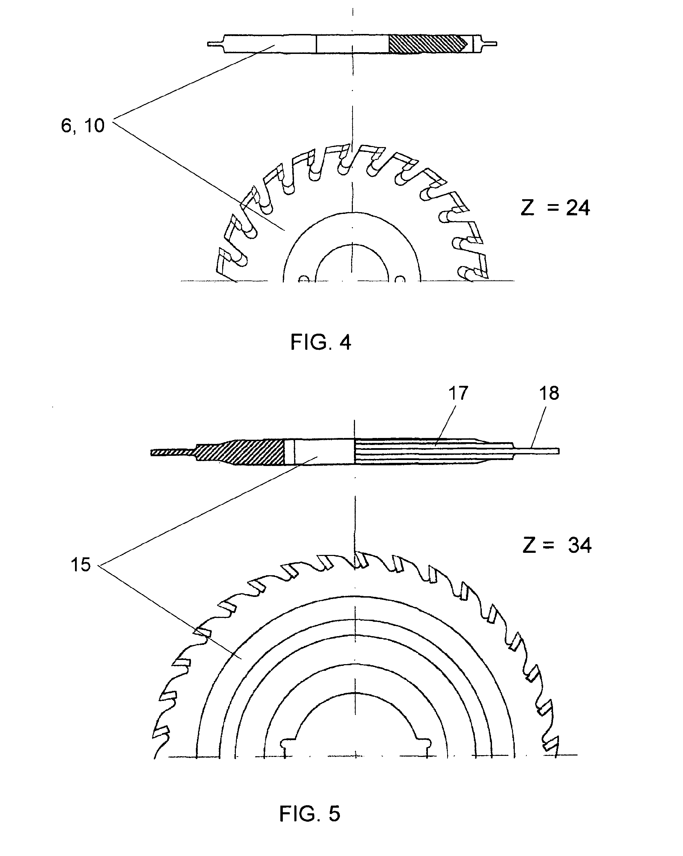

- Fig. 4: den erfindungsgemäßen Profilfräser in der Draufsicht und der hälftigen Seitenansicht;
- Fig. 5: das erfindungsgemäßen Trennwerkzeug in der Draufsicht und der hälftigen Seitenansicht.

Fig . 2 zeigt eine schematische Darstellung einer Anlage 1 zur Verarbeitung von Schnitthölzern 2, die der linken Seite der Anlage 1 zugeführt werden. Das Schnittholz 2 wird in einem vorgelagerten Arbeitsschritt durch entsprechendes Auftrennen von Stammholz und Fertigbearbeitung der Seiten und der Kanten der Schnittware bereitgestellt. Da dieser Arbeitsschritt nicht Gegenstand der Erfindung ist und dem allgemein bekannten Stand der Technik zuzurechnen ist, wird im Ausführungsbeispiel hierauf nicht näher eingegangen.

Die Anlage 1 besteht in herkömmlicher Weise aus Vorschubwalzen 4, durch die das Schnittholz 2 in Vorschubrichtung durch die Anlage 1 und an den ortsgebundenen Bearbeitungswerkzeugen entlang geführt und transportiert wird.

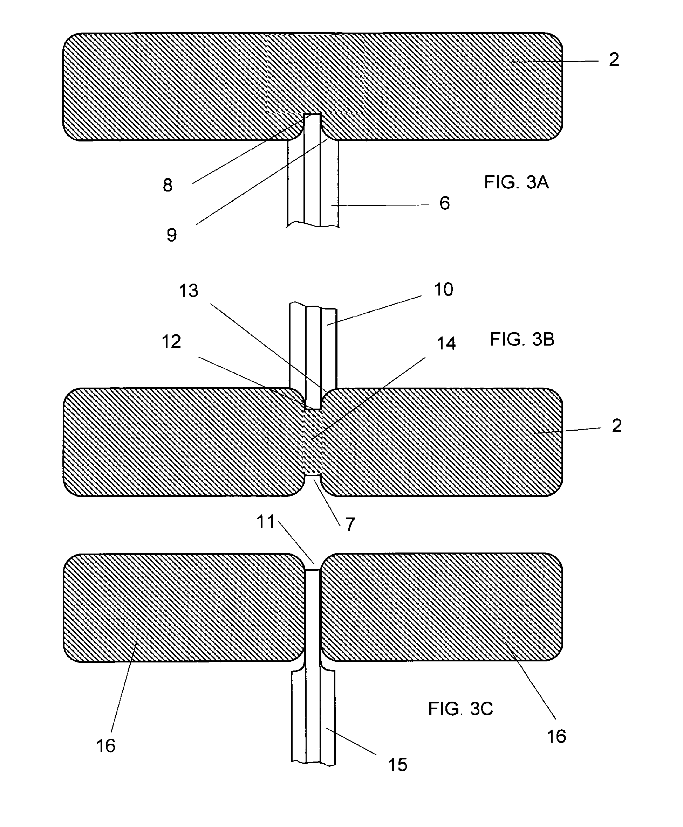

In einem ersten Arbeitsschritt des Fertigungsablaufes (Fig. 3A) wird die Unterseite des Schnittholzes 2 in Vorschubrichtung bearbeitet. Dazu wird der untere Profilfräser 6 eingesetzt, der das untere Profil 7 mit einer vorgegebenen Schnitttiefe in das Schnittholz 2 einarbeitet. Wie aus dem Querschnitt des Schnittholzes 2 in diesem Bereich ersichtlich ist, wird das Schnittholz 2 mit einer Nut 8 versehen, die die Materialdicke des Schnittholzes 2, die in einem nachfolgenden Arbeitsschritt abschließend zu trennen ist, entsprechend verringert.

Der Profilfräser 6 versieht die durch den Einschnitt erzeugten Kanten zeitgleich mit einem durch die konstruktiven Abmessungen des Profil- oder Konstruktionsholzes vorgegebenen Radius 9. Es sind auch andere Profile möglich oder keine Profile, wenn man nur trennt.

In einem zweiten Arbeitsschritt des Fertigungsablaufes (Fig. 3B) wird die Oberseite des Schnittholzes 2 in Vorschubrichtung bearbeitet. Dazu wird der obere Profilfräser 10, der in Vorschubrichtung hinter dem Profilfräser 6 angeordnet ist, eingesetzt, der das obere Profil 11 mit einer vorgegebenen Schnitttiefe in das Schnittholz 2 einarbeitet. Wie aus dem Querschnitt des Schnittholzes 2 in diesem Bereich ersichtlich ist, wird das Schnittholz 2 mit einer Nut 12 versehen, die die Materialdicke des Schnittholzes 2, das in einem nachfolgenden Arbeitsschritt abschließend zu trennen ist, weiter verringert.

Der Profilfräser 10 versieht die durch den Einschnitt erzeugten Kanten zeitgleich mit einem durch die konstruktiven Abmessungen des Profil- oder Konstruktionsholzes vorgegebenen Radius 13.

Nachdem diese Vorschnitte und Profilierungen im ersten und zweiten Arbeitsschritt erfolgt sind, verbleibt zwischen den Nuten 8 und 12 ein Steg 14, der erst durch den dritten und abschließenden Arbeitsschritt (Fig. 3C) zerspant wird.

In diesem Arbeitsschritt wird das erfindungsgemäße Trennwerkzeug 15 eingesetzt, das den verbliebenen Steg 14 zerspant und damit das Schnittholz 2 in die Profil- oder Konstruktionshölzer 16 zerlegt.

Das Trennwerkzeug 15 besteht aus einem kreisscheibenförmigen Stammkörper 17 mit einer Dicke von vorzugsweise 24 mm, die dem Trennwerkzeug 15 auch bei höchstem Vorschub eine hohe Stabilität gibt. Der Stammkörper 17 verjüngt sich bei einem Radius von vorzugsweise 150 mm nach außen hin zu einem Sägeblatt 18 mit einer Dicke, die der Breite der unteren Nut 9 und der oberen Nut 12 angepasst ist. Die Schnitttiefe des Sägeblattes 18 von vorzugsweise 50 mm gewährleistet ein Zerspanen des Steges 14, wobei die Trennflächen des Profilholzes 16 den Qualitätsansprüchen gerecht wird.

Durch die erfindungsgemäße Anordnung des Werkzeugsatzes wird der Profilier - und Trennvorgang auf drei Schnitte aufgeteilt. Somit werden die Schnittkräfte optimal verteilt.

Dadurch können höhere Vorschübe realisiert werden ohne die Werkzeuge zu überlasten.

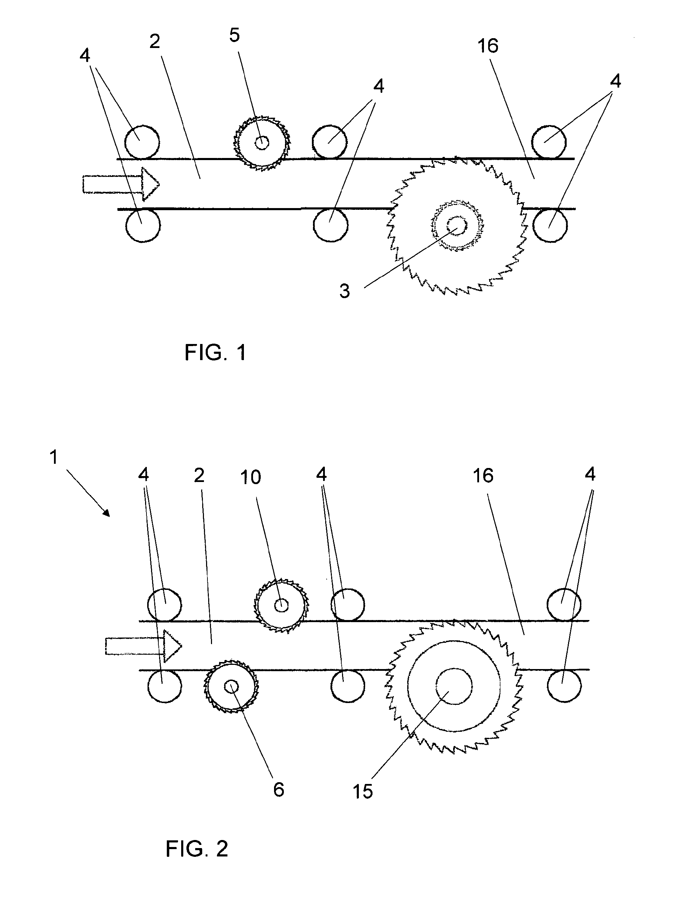

Bei dem Verfahren gemäß dem bekannten Stand der Technik, wie er in Fig. 1 beschrieben ist, wird der untere Profiliervorgang und das Trennen von einer Profilsäge 3 durchgeführt, das aus einer Kombination aus einem Kreissägeblatt zum Trennen der Schnitthölzer und zu beiden Seiten des Sägeblattes auf der gleichen Drehachse angeordneten Profilfräsern zur Bearbeitung der durch die Trennfuge gebildeten Kanten besteht.

Diese gemäß dem Stand der Technik eingesetzte Profilsäge hat hinsichtlich ihrer Schnittgeschwindigkeit Grenzen, auf die in der Beschreibungseinleitung bereits hingewiesen wurde.

Die verbesserte Einsatzmöglichkeit des erfindungsgemäßen Trennwerkzeuges resultiert aus der Konstruktion des Stammkörpers des Trennwerkzeuges, der Anordnung der Werkzeuge in der Maschine und aus der dadurch optimalen Aufteilung der Schnittkräfte auf die einzelnen Werkzeuge.

Wenn auch die Erfindung in Bezug auf eine bevorzugte Ausführung beschrieben und in den Zeichnungen dargestellt wurde, ist es von Fachleuten so zu verstehen, dass zahlreiche Veränderungen ausgeführt werden und Äquivalente für Elemente zur Anwendung kommen, ohne von dem Schutzumfang der Erfindung abzuweichen, wie er in den Ansprüchen definiert ist.

Weiterhin können viele Modifikationen erfolgen, um eine spezielle Situation oder ein spezielles Material an die Merkmale der Erfindung anzupassen, ohne im Wesentlichen von ihrem Schutzumfang abzuweichen. Es ist daher beabsichtigt, dass die Erfindung nicht auf die spezielle, durch die Zeichnungen dargestellte und in der Beschreibung als beste Ausführungsart der Erfindung beschriebene Ausführung beschränkt ist, sondern dass die Erfindung alle Ausführungen einschließt, die in die Beschreibung der beigefügten Ansprüche fallen.

So ist es möglich, die Anordnung des unteren und des oberen Profilfräsers zueinander zu verändern, ohne den Schutzumfang der Erfindung zu verlassen. Das bedeutet, dass das Schnittholz zuerst oben und im zweiten Schritt unten profiliert wird. Es ist auch möglich, den unteren und den oberen Profilfräser in einer Vertikalebene anzuordnen und damit die nacheinander ablaufenden Profilierungsschritte zu einem Schritt zusammenzufassen.

Weiterhin kann der dem Profilierungsschritt folgende Trennschnitt durch das Trennwerkzeug von oben erfolgen.

In gleicher Weise können zur Realisierung mehrerer Schnittebenen an einem Schnittholz die entsprechenden Bearbeitungswerkzeuge nebeneinander angeordnet werden.

### Aufstellung der verwendeten Bezugszeichen

- 1: Anlage
- 2: Schnittholz
- 3: Profilsäge
- 4: Vorschubwalzen
- 5: Ritzwerkzeug
- 6: Unterer Profilfräser
- 7: Unteres Profil
- 8: Untere Nut
- 9: Radius
- 10: Oberer Profilfräser
- 11: Oberes Profil
- 12: Obere Nut
- 13: Radius
- 14: Steg
- 15: Trennwerkzeug
- 16: Profilholz
- 17: Stammkörper
- 18: Sägeblatt

## Patentansprüche

1. Verfahren zum Profilieren und Trennen von Schnitthölzern in Anlagen, die mit Mitteln zum Andrücken und Transportieren der Schnitthölzer in Längsrichtung entlang von in der Anlage ortsfest angeordneten, auf die Oberseite und die Unterseite des Schnittholzes einwirkenden Profilierungs- und Trennwerkzeugen, ausgestattet sind, wobei das Verfahren durch folgende Arbeitsschritte **gekennzeichnet** ist,
- Zuführen des Schnittholzes (2) zu einem ersten Profilfräser (6), der das Schnittholz (2) an einer Seite entlang der Trennlinie mit einer Nut (8) versieht, wobei die Nut (8) eine Tiefe aufweist, die die Materialdicke des Schnittholzes (2) im Trennbereich entsprechend verringert, wobei durch den Profilfräser (6) gleichzeitig die durch die Nut (8) gebildeten Kanten profiliert werden,
- Weiterführen des Schnittholzes (2) zu einem zweiten, dem Profilfräser (6) identischen Profilfräser (10), der in Vorschubrichtung hinter dem Profilfräser (6) angeordnet ist, und der das Schnittholz (2) an seiner gegenüberliegenden Seite entlang der Trennlinie mit einer zweiten, der ersten Nut (8) gegenüberliegenden Nut (12) versieht, wobei die Nut (12) eine Tiefe aufweist, die die Materialdicke des Schnittholzes (2) im Trennbereich weiter verringert, wobei durch den Profilfräser (10) gleichzeitig die durch die Nut (12) gebildeten Kanten profiliert werden,
- Weiterführung des Schnittholzes (2) zu einem Trennwerkzeug (15), das in Vorschubrichtung hinter dem Profilfräser (10) angeordnet ist, und das den zwischen der unteren Nut (8) und der oberen Nut (12) entlang der Trennlinie verbliebenen Steg (14) zerspant, wobei das Trennwerkzeug (15) in seinem Wirkbereich eine Dicke aufweist, die der Breite der Nut (8, 12) entspricht.

2. Verfahren nach Anspruch 1, **dadurch gekennzeichnet, dass** das Zuführen des Schnittholzes (2) zu einem ersten unteren Profilfräser (6), der das Schnittholz (2) an seiner Unterseite entlang der Trennlinie mit einer unteren Nut (8) versieht, das Weiterführen des Schnittholzes (2) zu einem zweiten oberen, dem Profilfräser (6) identischen Profilfräser (10), der das Schnittholz (2) an seiner Oberseite entlang der Trennlinie mit einer oberen, der unteren Nut (8) gegenüberliegenden Nut (12) versieht, und die Weiterführung des Schnittholzes (2) zu einem Trennwerkzeug (15), der in Vorschubrichtung hinter dem Profilfräser (10) und unterhalb des Schnittholzes (2) angeordnet ist, erfolgt.

3. Verfahren nach Anspruch 1 und 2, **dadurch gekennzeichnet, dass** das Schnittholz (2) in Längsrichtung mehrfach profiliert und getrennt werden kann, wobei jeder Trennlinie ein aus unterem Profilfräser (6), oberem Profilfräser (10) und Trennwerkzeug (15) gebildeter Werkzeugsatz zugeordnet ist.

4. Verfahren nach Anspruch 1 bis 3, **dadurch gekennzeichnet, dass** das Schnittholz (2) in Längsrichtung mehrfach profiliert und getrennt werden kann, wobei dem unteren Profilfräser (6) weitere untere identische Profilfräser auf gleicher Achse gleichmäßig untereinander beabstandet nebengeordnet sind, dem oberen Profilfräser (10) weitere obere identische Profilfräser auf gleicher Achse gleichmäßig untereinander beabstandet nebengeordnet sind und dem Trennwerkzeug (15) weitere identische Trennwerkzeug auf gleicher Achse gleichmäßig untereinander beabstandet nebengeordnet sind

5. Werkzeugsatz zur Durchführung des Verfahrens, **dadurch gekennzeichnet, dass** der Werkzeugsatz aus einem unteren Profilfräser (6) zur Herstellung einer unteren Nut (8) an der Unterseite des Schnittholzes (2) entlang der Trennlinie, einem oberen Profilfräser (10) zur Herstellung einer oberen Nut (12) an der Oberseite des Schnittholzes (2) entlang der Trennlinie und einem einstückigen Trennwerkzeug (15) zur Zerspanung des zwischen der unteren Nut (8) und der oberen Nut (12) befindlichen Steges (14) besteht.

6. Werkzeugsatz nach Anspruch 5, **dadurch gekennzeichnet, dass** das Trennwerkzeug (15) aus einem kreisscheibenförmigen Stammkörper (17) mit einer dem Trennwerkzeug (15) Stabilität verleihenden Dicke gebildet wird, wobei sich der Stammkörper (17) radial nach außen hin zu einem Sägeblatt (18) mit einer Dicke, die der Breite der Nut (9, 12) angepasst ist, stufenförmig verjüngt und die Schnitttiefe des Sägeblattes (18) ein Zerspanen des Steges (14) ermöglicht, wobei der stufenförmige Übergang zwischen der Grundplatte (17) und dem Sägeblatt (18) dem Profil des Profilfräsers (6, 10) angepasst ist.
